# EUROPEAN PATENT APPLICATION

(11) **EP 3 139 262 A1**
(43) Date of publication of application: **08.03.2017**
(21) Application number: 16186564.7
(22) Date of filing: 31.08.2016
(51) Int. Cl.: G06F 3/0488, G06F 3/0484

(54) **VEHICULAR INFORMATION PROCESSING APPARATUS**

(30) Priority: 01.09.2015 JP 2015172386
(71) Applicant: Mitsubishi Jidosha Kogyo K.K., Tokyo 108-8410 (JP)
(72) Inventor: Hirano, Toyohito, Tokyo, 108-8410 (JP); Kobayashi, Yoichi, Tokyo, 108-8410 (JP); Morikawa, Susumu, Tokyo, 108-8410 (JP); Irikata, Shingo, Tokyo, 108-8410 (JP); Kawasaki, Akinori, Tokyo, 108-8410 (JP)
(74) Representative: Vossius & Partner Patentanwälte Rechtsanwälte mbB

(57) **Abstract**

An object of the present invention is to make a setting for each vehicular device installed in the vehicle I by performing simple input manipulations. A vehicular information processing apparatus includes a storage unit in which plural main contents which are pieces of information relating to vehicular devices and plural sub-contents which are pieces of information relating to setting items of the vehicular devices are stored, a touch screen display that displays the main contents and at least part of the sub-contents and receives an input manipulation, an input detection unit that detects a first manipulation or a second manipulation on the basis of the input manipulation and a display control unit that causes the touch screen display to display the main contents and the at least part of the sub-contents, and controls a corresponding vehicular device when the first manipulation or the second manipulation is performed for a main content or a sub-content. The display control unit causes the touch screen display to display one of sub-contents relating to a vehicular device of each of the main contents in a display region of the main content. When the first manipulation is detected, the display control unit renders a corresponding main content into a selected state. When the second manipulation is detected, the display control unit controls a vehicular device on based on a setting item, selected by the second manipulation, of the sub-content displayed in the display region of the selected main content.

## Description

### BACKGROUND OF THE INVENTION

### 1. Technical Field

The present invention relates to a vehicular information processing apparatus which displays setting items for setting of various devices of a vehicle and receives an input from the driver or a passenger.

### 2. Related Art

Vehicular information processing apparatus are known which are installed in vehicles such as automobiles and display various kinds of information. Also known are vehicular information processing apparatus which display, on a touch panel, a picture through which to control various devices such as an air-conditioner installed in a vehicle and control the various devices on the basis of inputs that are made through the touch panel (refer to Japanese Patent No. 4, 919,936, for example).

Vehicular information processing apparatus have plural devices to be controlled and each device has a variety of setting items. More specifically, vehicular information processing apparatus have a user select one of the devices to be controlled and then select among the setting items of the selected device. As such, vehicular information processing apparatus are configured so as to have a user make inputs for items relating to the various devices step by step.

However, in vehicular information processing apparatus having such a configuration, a user needs to recognize items that are displayed step by step until reaching a desired setting item, which takes long time.

Furthermore, the various device may be different from each other in the method for selecting a setting item. For example, there may occur a case that a temperature of an air-conditioner is set by an input manipulation of pushing a temperature setting button displayed on a touch panel and a radio set is tuned by a slide manipulation on the touch panel. Such input manipulations that vary from one device setting item to another are complicated and hence burdensome to a user.

The present invention has been made in view of the above circumstances, and an object of the invention is therefore to provide a vehicular information processing apparatus that allows a user to set various devices installed in a vehicle by simple input manipulations.

### SUMMARY OF THE INVENTION

The invention provides a vehicular information processing apparatus including a storage unit stored with plural main contents which are pieces of information relating to vehicular devices and plural sub-contents which are pieces of information relating to setting items of the vehicular devices; a touch screen display which displays the main contents and at least part of the sub-contents and receives an input manipulation; an input detection unit which detects a first user manipulation or a second user manipulation on the basis of the input manipulation; and a display control unit which causes the touch screen display to display the main contents and the at least part of the sub-contents, and controls a corresponding vehicular device when a first user manipulation or a second user manipulation is performed for a main content or a sub-content. The display control unit causes the touch screen display to display one of sub-contents relating to a vehicular device of each of the main contents in a display region of the main content; when a first user manipulation is detected, renders a corresponding main content into a selected state; and when a second user manipulation is detected, controls a vehicular device on the basis of a setting item, selected by the second user manipulation, of the sub-content displayed in the display region of the selected main content.

This vehicular information processing apparatus allows a user to see, together, single sub-contents of plural respective main contents, whereby the user can easily recognize the states of the respective vehicular devices at one time. Selection among the main contents is made by a first user manipulation, and selection among the selection items of the sub-content displayed in the display region of the selected main content is made by a second user manipulation. As a result, each vehicular device can be set by the two kinds of manipulations performed on the touch screen display without causing any transition between pictures.

### BRIEF DESCRIPTION OF THE DRAWINGS

Fig. 1 shows a general configuration of a vehicle that is equipped with a vehicular information processing apparatus according to a first embodiment of the present invention.
Fig. 2 shows an example picture displayed on a touch screen display in a first embodiment.
Fig. 3 shows another example picture displayed on the touch screen display.
Fig. 4 shows still another example picture displayed on the touch screen display.
Figs. 5A and 5B show further example pictures displayed on the touch screen display.
Fig. 6 shows an example picture displayed on the touch screen display in a second embodiment.

### DESCRIPTION OF PREFERRED EMBODIMENT

Embodiments of the present invention will be described below. However, the embodiments are just examples and should not be construed as restricting the invention.

### <Embodiment 1>

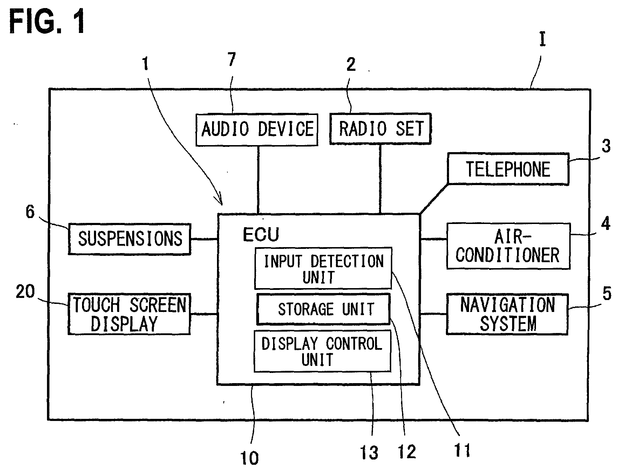

Fig. 1 shows a general configuration of a vehicle I that is equipped with a vehicular information processing apparatus 1 according to a first embodiment. The vehicle I is equipped with plural vehicular devices. The term "vehicular device" as used in the invention means a device or a mechanism that can be controlled by the vehicular information processing apparatus 1. A radio set 2, a telephone 3, an air-conditioner 4, a navigation system 5, suspensions 6, and an audio device 7 are installed in the vehicle I as example vehicular devices.

Each of the vehicular devices has setting items that can be controlled by the vehicular information processing apparatus 1. And each setting item is associated with selection items such as specific setting values of the corresponding vehicular device. For example, the radio set 2 has a sound volume, a radio station, etc. as setting items and the radio station has specific frequencies of respective radio stations as selection items.

Likewise, the telephone 3 has a sound volume, a telephone directory, etc. as setting items and the telephone directory has telephone numbers etc. as selection items. The air-conditioner 4 has, as setting items, a driver-seat-side temperature, a front-passenger-seat-side temperature, a wind volume, a wind direction, etc. The driver-seat-side temperature and the front-passenger-seat-side temperature have, as selection items, temperature gradation values "16°C," "17°C," ···, "35°C." The wind volume has, as selection items, wind volume gradation values "1", "2," "3," "4," ···. The wind direction has, as selection items, wind directions relative to the driver or a passenger sitting in the front passenger seat, such as "legs," "upper body," "legs and upper body," etc.

The navigation system 5 has, as setting items, selection of routes to, for example, a destination, etc. The selection of routes has, as selection items, plural routes such as "route A," "route B," ···. The suspensions 6 have, as setting items, a running mode of the suspensions 6, etc. The running mode has, as selection items, recommendable heights (total lengths) of the suspensions 6 for respective road types, such as "low" (for expressways), "medium" (for unpaved roads such as sandy roads), "high" (for rough roads such as roads with exposed rocks), etc.

The audio device 7 has, as setting items, a sound volume, a track (a tune number of a CD), etc. The sound volume has, as selection items, sound volume gradation values "1," "2," "3," "4," ···. The track has, as selection items, track numbers "01," "02," ···.

The vehicular information processing apparatus 1 is equipped with a main body unit 10 which performs various kinds of processing and a touch screen display 20 which displays various kinds of information and receives an input manipulation.

The touch screen display 20 displays various kinds of information on its screen under the control of the main body unit 10, and sends the main body unit 10 an electrical signal indicating an input manipulation made on the screen.

The main body unit 10 is implemented as an electronic control unit (ECU). The main body unit 10 is equipped with an input detection unit 11, a storage unit 12, and a display control unit 13.

The input detection unit 11 detects a first user manipulation or a second user manipulation on the basis of an electrical signal indicating an input manipulation that has been made on the touch screen display 20. The user manipulation is a series of finger movements with a touch on the touch screen display 20. Example user manipulations are a slide manipulation, a click manipulation, and a pinch manipulation.

The slide manipulation is a manipulation that a finger is moved in a top-bottom direction or a left-right direction on the screen. The input detection unit 11 detects a slide manipulation on the basis of a variation of the finger touch position on the screen of the touch screen display 20. A slide manipulation that a finger is moved leftward from a start point is called a left slide manipulation. Likewise, slide manipulations that a finger is moved rightward, upward, downward from a start position are called a right slide manipulation, an up slide manipulation, and a down slide manipulation, respectively.

In this embodiment, the first user manipulation includes a left slide manipulation and a right slide manipulation and the second user manipulation includes an up slide manipulation and a down slide manipulation.

The click manipulation is a manipulation that a finger touches the screen of the touch screen display 20 at one point for a short time. The pinch manipulation is a manipulation that two fingertips move closer to each other or away from each other while being kept in contact with the screen of the touch screen display 20.

The storage unit 11 is stored with main contents and sub-contents. The main contents are pieces of information relating to the vehicular devices and are defined for the respective vehicular devices. More specifically, the main content of each vehicular device include a name of the vehicular device, a list of setting items (sub-contents) relating to the vehicular device, display forms on the touch screen display 20, etc. The display form includes an image that is used when the main content is displayed on the touch screen display 20, a position, a size, and a range of the image, and other information.

The sub-contents are pieces of information relating to the respective setting items of the vehicular devices, and plural sub-contents are defined for each main content. More specifically, each sub-content include a name of the setting item, selection items relating to the setting item, and display forms on the touch screen display 20. The display forms include images that are used when the sub-content is displayed on the touch screen display 20, positions, sizes, and ranges of the images, and other information.

The storage unit 12 is also stored with main content groups each consisting of plural main contents. Table 1 shows relationships between the main content groups, the main contents, and the sub-contents.

**[Table 1]**

| Main content group | Main content | Sub-content (setting item) | Selection items |
|---|---|---|---|
| | Navigation system 5 | Route selection | Route A, Route B, ··· |
| | | Guidance | |
| | Radio set 2 | Sound volume | 1, 2, 3, 4, ··· |
| | | Radio station | oo FM, ΔΔ Radio, ··· |
| | Air-conditioner 4 | Driver-seat-side temp. | 16°C, 17°C, ···, 35°C |
| 1 | | Front-passenger-seat-side temp. | 16°C, 17°C, ···, 35°C |
| | | Wind volume | 1, 2, 3, 4, ··· |
| | | Wind direction | Legs, Upper body, Legs and upper body |
| | Telephone 3 | Sound volume | 1, 2, 3, 4, ··· |
| | | Call | Picking up the phone, Hanging up the phone |
| | | Telephone directory | 0800-xxx-xxxx, 03-xxx-xxx x, ··· |
| | Suspensions 6 | Running mode | Low (for expressway), Medium, High (for rough road) |
| 2 | Audio device 7 | Sound volume | 1, 2, 3, 4, ··· |
| | | Track | 01, 02, ··· |

In the embodiment, as shown in Table 1, two main content groups are stored in the storage unit 12. Main content groups "1" and "2" are referred to as a first main content group and a second main content group, respectively. Main contents as pieces of information relating to the navigation system 5, the radio set 2, the air-conditioner 4, the telephone 3, and the suspensions 6 belong to the first main content group. Main contents as pieces of information relating to the audio device 7 and the other vehicular devices belong to the second main content group. The storage unit 12 is also stored with sets of sub-contents, each set being correlated with one main content, and sets of selection items (setting values), each set being correlated with one sub-content and being settable for the vehicular device of the main content relating to the sub-content.

Since the main content groups, the main contents, the sub-contents, and the selection items are stored in the storage unit 12 in the above manner, it is possible to read out the main contents that belong to a particular main content group or the sub-contents and the selection items belonging to each main content.

The display control unit 13 displays main contents and sub-contents on the screen, and controls a target vehicular device when a first user manipulation and a second user manipulation have been performed for a main content and a sub-content.

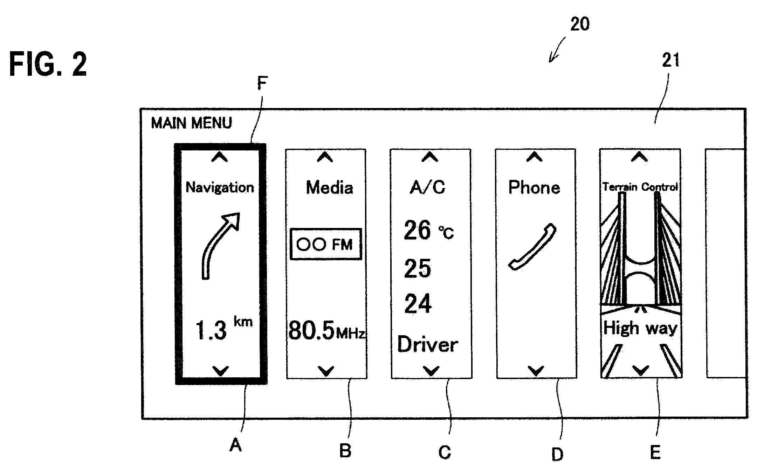

Referring to Figs. 2-5, a description will be made of how the display control unit 13 performs display and control. Figs. 2-5 show example pictures displayed on the touch screen display 20.

As shown in Fig. 2, the display control unit 13 displays the main contents in an image display area 21 of the touch screen display 20. In the embodiment, images of five respective main contents are displayed in the display area 21 so as to be arranged horizontally.

The display control unit 13 displays the individual main contents in the display area 21 in the form of rectangular, card-shaped images. The main content relating to the navigation system 5 is displayed at the leftmost position in the display area 21. The rectangular display region for this main content is referred to as display region A. Likewise, respective display regions B, C, D, and E for the main contents relating to the radio set 2, the air-conditioner 4, the telephone 3, and the suspensions 6 (vehicle height adjusting mechanisms) are arranged horizontally on the right of display region A. Display regions A-E will be referred to simply as "display regions" when they need not be discriminated from each other.

As shown in Fig. 2, first, in an initial state, the display control unit 13 makes a display in which the leftmost display region A in the display area 21 is selected. There are no particular limitations on the manner of indicating a selected main content as long as the fact that the main content is selected can be recognized by a user. In the embodiment, the display region of a selected main content is surrounded by a frame that is colored in high luminous intensity.

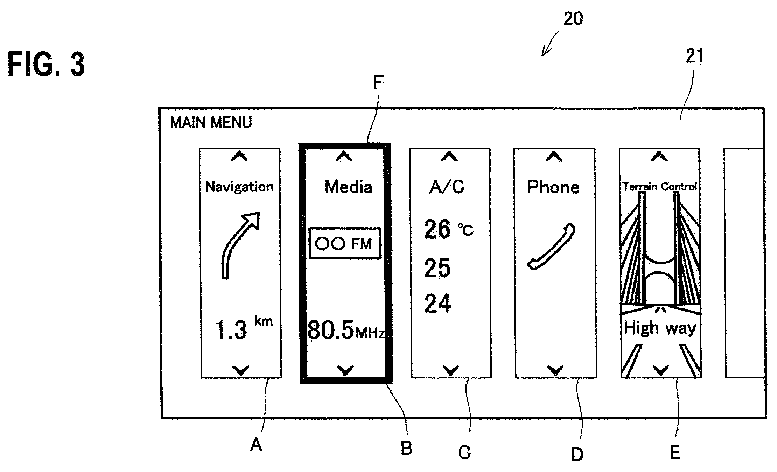

If a first user manipulation is then detected, the display control unit 13 renders another main content in a selected state (see Fig. 3). In the embodiment, when the input detection unit 11 has detected a right slide manipulation which is a first user manipulation, the display control unit 13 does not change the display positions, in the display area 21, of the main content display regions A-E and renders display region B, in place of display region A, in a selected state.

The display control unit 13 surrounds display region B, in place of display region A, by a frame F that is colored in high luminous intensity. That is, whereas not changing the display positions, in the display area 21, of the main content display regions A-E, the display control unit 13 moves the frame F horizontally to thereby inform the user that the selected display region has been changed to the adjacent display region.

In this manner, the display control unit 13 renders into a selected state one of the main contents displayed in the display area 21 in response to a first user manipulation and thereby determines a target vehicular device for which the user is going to change a setting. Although not shown in any drawings, if a left slide manipulation is detected, the display control unit 13 moves the frame F to the immediately left display region to render the display region newly enclosed by the frame F into a selected state, similarly to the case of detection of a right slide manipulation.

In the examples shown in Figs. 2 and 3, the main contents belonging to the first main content group are displayed in the display area 21. Where not all of the main contents can be displayed in the display area 21, only the main contents belonging to the first main content group or only those belonging to the second main content group may be displayed in the display area 21.

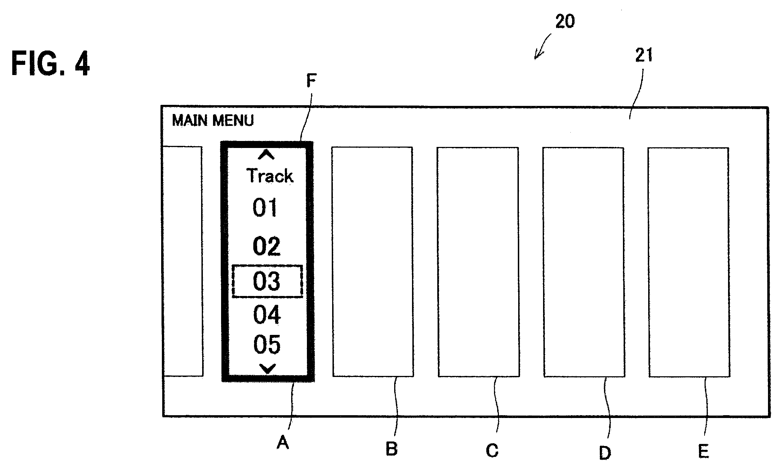

Assume that the main content display region E which is displayed at one end (right end) in the display area 21 is selected. If a right slide manipulation directed to the outside of the display area 21 is detected in this state, the display control unit 13 displays, in the display area 21, the main content belonging to the second main content group. Fig. 4 shows a state that the main contents belonging to the second main content group are displayed.

In this example, the audio device 7 which relates to one main content belongs to the second main content group is displayed in display region A and one sub-content (setting item) "track" relating to the audio device 7 is also displayed there. Although items to be displayed in display regions B-E are omitted in Fig. 4, actually the main contents belonging to the second main content group and the associated sub-contents are displayed there.

Furthermore, the display control unit 13 encloses display region A displayed at the other end (left end) in the display area 21 by a frame F to indicate that it is in a selected state.

As described above, where not all of the main contents can be contained in the display area 21, the display control unit 13 may display them in the display area 21 by dividing them into the main contents belonging to the first main content group and those belonging to the second main content group and switching between the former and the latter.

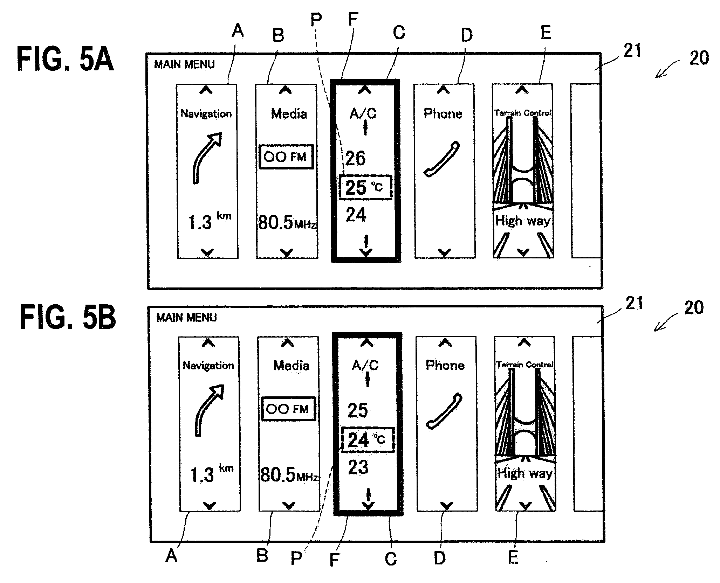

As shown in Fig. 5A, the display control unit 13 displays a sub-content relating to a main content in each of the main content display regions A-E. As shown in Table 1, plural sub-contents relate to each main content. The display control unit 13 displays one of the sub-contents of each main content in its display region. The display control unit 13 displays selection items of a sub-content in the selected main content display region.

There are no particular criteria for selection of a sub-content to be displayed; for example, a sub-content that was selected most frequency in the past or a sub-content that was dealt with at the immediately preceding time may be selected and displayed in a main content display region.

Information indicating how to display each sub-content in a display region is stored in the storage unit 12 in advance. This information includes characters, images, etc.

For example, in Fig. 5A, an image for the guidance which is one sub-content of the navigation system 5 is displayed in display region A. More specifically, an image that contains an arrow and instructs the driver to make a right turn 1.3 km ahead is displayed in display region A. As shown in Table 1, the guidance has no particular selection items and serves to merely present information. Like the guidance, a sub-content that has no selection items to be selected by a user and serves to merely present information may be displayed in a display region.

An image relating to the radio station which is one sub-content of the radio set 2 is displayed in display region B. More specifically, a name and a frequency of a radio station are displayed as a selection item.

Display region C is rendered in a selected state as a result of a first user manipulation (describe above), and one selection item is emphasized by a frame F there. An image relating to the driver-seat-side temperature which is one sub-content of the air-conditioner 4 is displayed in display region C. As described later in detail, selection items "24," "25," and "26" (unit: °C) which are temperatures that can be set in the air-conditioner 4 are displayed so as to be arranged vertically.

An image relating to the call which is one sub-content of the telephone 3 is displayed in display region D. More specifically, an image of a picked-up handset is displayed.

An image relating to the running mode which is one sub-content of the suspensions 6 is displayed in display region E. More specifically, an image of a road that corresponds to one selection item of the running mode is displayed.

Next, referring to Figs. 5A and 5B, a description will be made of processing that is performed when a second user manipulation made on one of the sub-contents displayed in the above-described manner is detected.

First, when the main content of the air-conditioner 4 is selected by a first user manipulation and thereby rendered in a selected state, the display control unit 13 displays selection items of the driver-seat-side temperature of the air-conditioner 4 in display region C in such a manner that they are arranged vertically with a center selection item located at a prescribed position P. More specifically, the display control unit 13 sets the prescribed position P approximately at the center of display region C, and arranges the selection items "24°C," "25°C," and "26°C" vertically around a currently set driver-seat-side temperature (in this example, 25°C) of the air-conditioner 4 among the selection items "16°C" to "35°C" of the driver-seat-side temperature in such a manner that the currently set temperature is located at the prescribed position P.

The display control unit 13 displays the selection item located at the prescribed position P in such a form indicating that it is selected. In the embodiment, the selection item located at the prescribed position P is displayed in bold.

If a second user manipulation is detected in the state of Fig. 5A, the display control unit 13 moves the selection items vertically in the main content display region C. For example, if an up slide manipulation which is a second user manipulation is detected, the display control unit 13 performs processing for lowering the setting temperature. More specifically, if an up slide manipulation is detected in the state of Fig. 5A, the display control unit 13 arranges the selection items "23°C," "24°C," and "25°C" vertically around the new setting temperature "24°C" in such a manner that the new setting temperature "24°C" is located at the prescribed position P (see Fig. 5B).

The display control unit 13 displays the next selection item"24°C" (which corresponds to the term "another selection item" used in the claims) newly located at the prescribed position P in such a manner that it is displayed in bold to indicate that it is a selected one, and returns the display form of the selection item "25°C" to the non-emphasizing form.

That is, whereas moving the selection items vertically in response to a second user manipulation, the display control unit 13 displays the selected selection item in bold in such a manner that it is always located at the prescribed position P in display region C. Thus, the display control unit 13 informs the user that the selected selection item has been changed while always displaying it at the prescribed position P.

When the selected selection item has been changed from "25°C" to "24°C," the display control unit 13 controls the air-conditioner 4 on the basis of the newly selected selection item. Since the sub-content "driver-seat-side temperature" is displayed in display region C, the display control unit 13 controls the air-conditioner 4 so that driver-seat-side temperature will be set at 24°C.

Although not shown in any drawings, for selection among the selection items relating to a sub-content of any of the other main contents, selection items can be displayed, the selected selection item is changed, and control is performed on the basis of the newly selected selection item in the same manner as in the case of the sub-content "driver-seat-side temperature" of the air-conditioner 4.

Incidentally, if a down slide manipulation is detected, the display control unit 13 moves the selection items downward and the selected selection item is thereby changed from "25°C" to another selection item "26°C" similarly to the case that an up slide manipulation is detected.

As described above, in the vehicular information processing apparatus 1 according to the embodiment, the main contents relating to the various vehicular devices are displayed in the display area 21 in list form and a sub-content (setting item) of each vehicular device is displayed in its main content display region. With this display form, a list of selection items of one sub-content of each of the plural main contents can be viewed in the display area 21. This allows a user to recognize states of the respective vehicular devices easily and simultaneously.

The vehicular information processing apparatus 1 enables selection among the main contents using a first user manipulation and enables selection among the selection items of a sub-content using a second user manipulation. Thus, setting of each vehicular device can be made by the two kinds of manipulations without the need for causing transitions to display main contents and sub-contents in the display area 21 in this order.

Conventionally, where items exist in layered form like main contents and sub-contents, it is necessary to have a user to make manipulations of selecting a main content to cause a transition to a sub-picture in which plural sub-contents belonging to the selected main content are displayed, then selecting one sub-content in the sub-picture, and finally selecting one of the selection items of the selected sub-content. In contrast, in the vehicular information processing apparatus 1 according to the embodiment, it is not necessary to have a user to select among items in order through a layered structure. Instead, a desired setting can be attained by making manipulations for main contents and sub-contents that are displayed in the display area 21.

Furthermore, for any combination of a main content and a sub-content, a selection item can be selected in a unified manner by two kinds of user manipulations, that is, a first user manipulation (up and down slide manipulations) and a second user manipulation (left and right slide manipulations). This provides a user with a unified, easily understandable manipulation system and hence can lower the load of making setting manipulations.

As described above, the embodiment allows a user to make a setting for each vehicular device installed in the vehicle I by performing simple input manipulations.

In the vehicular information processing apparatus 1 according to the embodiment, selection is made among the selection items of a sub-content by a vertical (up or down) slide manipulation. Whereas the selection items are moved vertically by a vertical slide manipulation, the selected selection item is always displayed at the prescribed position P in the display area 21. With this display control, the line of sight of a user can be kept directed to the prescribed position P without being moved vertically. This makes it possible to lower the degree of movement of the line of sight of the user. For example, even in making a down slide manipulation in a state that the field of view of the user contains a scene ahead and the touch screen display 20, the user need not lower the line of sight to a large extent to follow moving selection items, that is, the user can manipulate the touch screen display 20 without turning his or her eyes much away from the scene ahead of the vehicle I.

In the vehicular information processing apparatus 1 according to the embodiment, selection is made among the main contents by a horizontal (left or right) slide manipulation, Whereas the frame F indicating a main content selected by a horizontal slide manipulation is moved horizontally, the main content display regions themselves are not moved. Thus, even if the selected main content is changed, the main content display regions are always kept located at the same positions in the display area 21. Since the positions of the main content display regions are not changed, a user can easily recognize where the main contents relating to the respective vehicular devices are displayed in the entire display area 21.

Assume a hypothetical configuration in which the main content display regions are moved horizontally by a left slide manipulation or a right slide manipulation and the selected main content is always located at the center of the display area 21. In this case, since the arrangement of the main contents varies depending on the main content placed at the center of the display area 21 by a selection, it is necessary for a user to check where a main content a setting of which the user is going to change is located in the display area 21. The checking of the location of the target main content takes certain time.

In the vehicular information processing apparatus 1 according to the embodiment, the main contents are displayed in the display area 21 in such a manner that switching is made between plural main content groups. With this display control, the degree of movement of the line of sight of a user is made low at the time of switching among the main contents.

Assume a hypothetical configuration in which the main contents belonging to a first main content group are moved leftward by on main content, whereby one main content belonging to a second main content group appears at the rightmost position in the display area 21. In this case, as mentioned above, it is necessary for a user to check where a main content a setting of which the user is going to change is located.

In contrast, in the vehicular information processing apparatus 1 according to the embodiment, since the main contents are displayed in the display area 21 in such a manner that switching is made between the main content groups, a user need not follow a horizontal movement of main contents with his or her eyes, that is, the degree of movement of the line of sight can be lowered. Furthermore, since the main contents belonging to each main content group are always located at the same positions in the display area 21, the user can easily find a main content he or she wants to select.

In the vehicular information processing apparatus 1 according to the embodiment, a sub-content whose selection items have been selected most frequently is displayed in each main content display region. That is, sub-contents to be displayed in the display area 21 are selected automatically. This enhances the convenience of use of the vehicular information processing apparatus 1.

### <Embodiment 2>

Although in the vehicular information processing apparatus 1 according to the first embodiment one sub-content is selected automatically and displayed in each main content display region, the invention is not limited to this case. For example, plural sub-contents belonging to a main content may be displayed side by side in the display area 21 for selection by a user.

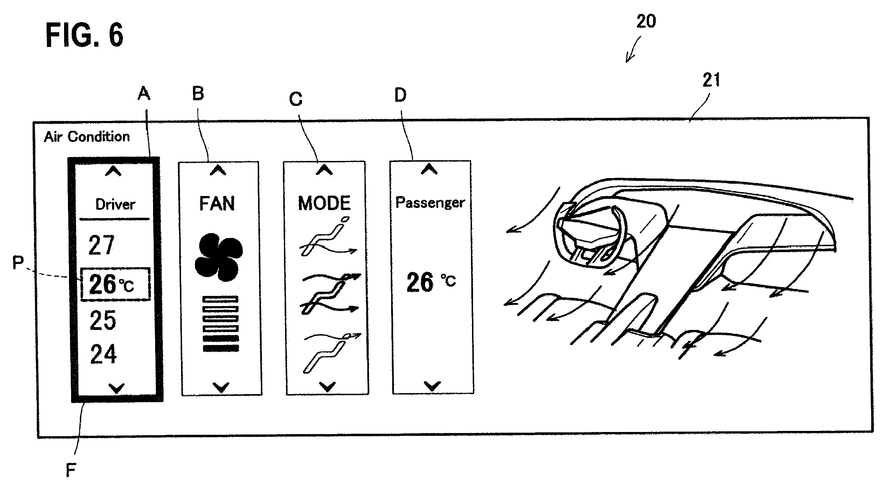

Fig. 6 shows an example picture displayed on the touch screen display 20. Components etc. having the same ones in the first embodiment will be given the same reference symbols as the latter and will not be described redundantly.

Although not shown in any drawings, assume that a click manipulation made in display region B for the air-conditioner 4 of the vehicular information processing apparatus 1 according to the first embodiment has been detected. In response, the display control unit 13 displays, in the display area 21, the four sub-contents belonging to the main content relating to the air-conditioner 4 in the form of rectangular, card-shaped images.

The four sub-contents are the driver-seat-side temperature, the wind volume, the wind direction, and the front-passenger-seat-side temperature and are displayed in display region A to display region D, respectively.

If a left slide manipulation or a right slide manipulation which is a first user manipulation is detected in a state that the sub-contents are displayed in the above manner, the display control unit 13 displays one sub-content as a selected one by moving a frame F horizontally to its display region. Since this sub-content is selected in the same manner as a main content is selected in the first embodiment, the manner of selection will not be described in detail.

If an up slide manipulation or a down slide manipulation (second user manipulation) made in the display region of the selected sub-content is detected, the display control unit 13 moves the selection items vertically and thereby displays, as a selected one, a selection item newly located at the prescribed position P.

In the example shown in Fig. 6, the sub-content relating to the driver-seat-side temperature is selected. If an up slide manipulation or a down slide manipulation is detected, the selection items "24°C," "25°C," "26°C," and "27°C" are moved vertically and a selection item that has been newly located at the prescribed position P is rendered into a selected state. Since this selection item is selected in the same manner as a selection item is selected in the first embodiment, the manner of selection will not be described in detail.

Although in the first embodiment only one sub-content is displayed in the display area 21 for each main content, in the second embodiment a desired sub-content can be selected from plural sub-contents and made a target selection item.

Not only a main content and sub-contents but also an image relating to the main content and the sub-contents may be displayed in the display area 21. In the example of Fig. 6, the main content and the sub-contents relating to the air-conditioner 4 are displayed in the display area 21. An image relating to them, that is, an animation image indicating a direction, a volume, and a temperature of a wind that is sent from the air-conditioner 4 to a front part of the vehicle compartment is displayed in a right portion of the display area 21.

This animation image is an image in which the driver seat and the front passenger seat are displayed on the left side and the right side, respectively, and a direction, a volume, and a temperature of a wind sent from the air-conditioner 4 are shown in the form of an animation. For example, if the setting of the driver-seat-side temperature is changed by performing an up slide manipulation or a down slide manipulation for the selection items displayed in display region A, the display control unit 13 displays arrows in a color that corresponds to a new temperature of a wind flowing toward the driver seat which is located on the left side. More specifically, the display control unit 13 displays arrows in a warmer color when the temperature is higher and in a colder color when the temperature is lower. A similar display is made in display region D when the setting of the front-passenger-seat-side temperature has been changed.

If the wind volume setting is changed by performing an up slide manipulation or a down slide manipulation for the selection items displayed in display region B, the display control unit 13 displays wind-indicative arrows that are thicker when the newly set wind volume is larger and thinner when the newly set wind volume is smaller.

Furthermore, if the wind direction setting is changed by performing an up slide manipulation or a down slide manipulation for the selection items displayed in display region C, the display control unit 13 shows the new wind direction by arrows. For example, if the newly set wind direction is "legs," the display control unit 13 displays arrows that are directed to bottom portions of the driver seat and the front passenger seat and their vicinities. Likewise, if the newly set wind direction is "upper body," the display control unit 13 displays arrows that are directed to portions, to receive the upper body of a driver sitting in the driver seat or a passenger sitting in the front passenger seat, of the driver seat and the front passenger seat and their vicinities. If the newly set wind direction is "legs and upper body," the display control unit 13 displays arrows that are directed to bottom portions of the driver seat and the front passenger seat, portions, to receive the upper body of a driver sitting in the driver seat or a passenger sitting in the front passenger seat, of the driver seat and the front passenger seat, and their vicinities.

Each displayed selection item of each sub-content has a function of causing a user to imagine an effect (e.g., a driver-seat-side temperature, a front-passenger-seat-side temperature, a wind volume, or a wind direction) that would be obtained when that setting is made. On the other hand, an animation image has a function of causing a user to visually imagine how, that is, by what wind direction, wind volume, or temperature, that setting would be realized.

As described above, the display control unit 13 displays an animation image that reflects a selected setting item (newly set setting) in the display area 21 together with the corresponding sub-content. As a result, a user can recognize how the newly set setting will be reflected in the vehicle I and visually recognize how the desired setting will be realized, which lowers the probability of occurrence of an improper setting.

### <Other embodiments>

Although the two embodiments have been described above, it goes without saying that the invention is not limited to these embodiments and new components may be added and part of the components of each embodiment may be omitted, replaced by other components, or modified in various other manners without departing from the spirit and scope of the invention.

For example, although in the embodiments the first user manipulation and the second user manipulation are a horizontal slide manipulation and a vertical slide manipulation, respectively, the invention is not limited to that case. It suffices that the first user manipulation and the second user manipulation be manipulations that are to be made on the touch screen display 20 and can be discriminated from each other.

Although in the embodiments the main contents or the sub-contents are arranged side by side in the horizontal direction and the selection items are arranged in the vertical direction, the invention is not limited to that case. The main contents or the sub-contents and the selection items may be arranged in line in any two different directions, respectively.

The vehicular devices as main contents are not limited to the ones described in the first embodiment, and are not restricted in any manners as long as they can be controlled by the vehicular information processing apparatus 1.

### [Industrial applicability]

The invention can be applied to the field of the automobile industry.

## Claims

1. A vehicular information processing apparatus comprising:
a storage unit (12) in which plural main contents which are pieces of information relating to vehicular devices and plural sub-contents which are pieces of information relating to setting items of the vehicular devices are stored;
a touch screen display (20) that displays the main contents and at least part of the sub-contents and receives an input manipulation;
an input detection unit (11) that detects a first manipulation or a second manipulation on the basis of the input manipulation; and
a display control unit (13) that causes the touch screen display (20) to display the main contents and the at least part of the sub-contents, and controls a corresponding vehicular device when the first manipulation or the second manipulation is performed for a main content or a sub-content,
wherein the display control unit (13) causes the touch screen display (20) to display one of sub-contents relating to a vehicular device of each of the main contents in a display region of the main content,
when the first manipulation is detected, the display control unit (13) renders a corresponding main content into a selected state, and
when the second manipulation is detected, the display control unit (13) controls a vehicular device on based on a setting item, selected by the second manipulation, of the sub-content displayed in the display region of the selected main content.

2. The vehicular information processing apparatus according to claim 1, wherein the input detection unit (11) detects a vertical input manipulation on the touch screen display (20) as the second manipulation,
each of the sub-contents has plural selection items,
the display control unit (13) causes the touch screen display (20) to display selection items of the sub-content displayed in a display region of the selected main contents in such a manner that the selection items are arranged vertically in the display region, and that one selection item located at a prescribed position in the display region of the selected main content is displayed in a form indicating that it is selected, and
when the second manipulation is detected, the display control unit (13) causes the touch screen display (20) to move the selection items vertically in the display region of the selected main content and to display another selection item that is newly located at the prescribed position in a form indicating that it is selected, and controls the vehicular device of the selected main content based on the selection item newly located at the prescribed position.

3. The vehicular information processing apparatus according to claim 1 or 2, wherein the input detection unit (11) detects a horizontal input manipulation on the touch screen display (20) as the first manipulation,
the display control unit (13) causes the touch screen display (20) to display the main contents in such a manner that the main contents are arranged horizontally and one of the main contents is displayed in a form indicating that it is selected, and
when the first manipulation is detected, the display control unit (13) causes the display regions of the main contents not to move and the touch screen display (20) to display a main content selected by the first manipulation in a form indicating that the main content is selected.

4. The vehicular information processing apparatus according to claim 3, wherein the storage unit stores plural main content groups each consisting of plural main contents,
the display control unit (13) causes the touch screen display (20) to display the main contents belonging to one of the main content groups in such a manner that they are arranged horizontally and one of the displayed main contents is displayed in a form indicating that it is selected, and
when a first manipulation directed to outside the touch screen display (20) is detected in a state that a main content located adjacent to one end of the touch screen display (20) is selected, the display control unit (13) causes the touch screen display (20) to display the main contents belonging to another main content group in such a manner that a main content located adjacent to the other end of the touch screen display (20) is displayed in a form indicating that it is selected.

5. The vehicular information processing apparatus according to any one of claims 1 to 4, wherein the display control unit (13) causes the touch screen display (20) to display a sub-content that has been selected most frequently among the sub-contents relating to each of the main contents in the display region of the main content.
